# EUROPÄISCHE PATENTSCHRIFT

(11) **EP 2 786 620 B1**
(45) Veröffentlichungstag und Bekanntmachung des Hinweises auf die Patenterteilung: **28.09.2022**
(21) Anmeldenummer: 12795383.4
(22) Anmeldetag: 21.11.2012
(51) Int. Cl.: H04W 52/02, H02J 3/14

(54) **SYSTEM FÜR EIN HAUSGERÄTE-ENERGIEMANAGEMENT UNTER BERÜCKSICHTIGUNG EINES EVOLUTIONÄREN MOBILFUNKSTANDARDS SOWIE ZUGEHÖRIGES VERFAHREN**
SYSTEM FOR AN ENERGY MANAGEMENT OF DOMESTIC APPLIANCES TAKING INTO ACCOUNT AN EVOLUTIONARY MOBILE RADIO STANDARD, AND ASSOCIATED METHOD
SYSTÈME DE GESTION D'ÉNERGIE D'APPAREILS ÉLECTROMÉNAGERS SELON UNE NORME DE RADIOTÉLÉPHONIE MOBILE ÉVOLUTIVE ET PROCÉDÉ CORRESPONDANT

(30) Priorität: 29.11.2011 DE 102011087278
(43) Veröffentlichungstag der Anmeldung: 08.10.2014
(73) Patentinhaber: BSH Hausgeräte GmbH, 81739 München (DE)
(72) Erfinder: GAUGLER, Johannes, 93073 Neutraubling (DE); KOLBE, Andreas, 12683 Berlin (DE); LEITL-NOBEL, Martin, 86465 Welden (DE); RANCK, Sharon, 89407 Dillingen (DE); SIPPEL, Matthias, 83329 Waging am See (DE)
(86) Internationale Anmeldenummer: PCT/EP2012/073153
(87) Internationale Veröffentlichungsnummer: WO 2013/079366

(56) Entgegenhaltungen:
- WO-A2-2006/079946
- US-A1- 2001 034 569
- US-A1- 2010 118 692
- US-A1- 2011 137 472
- US-A1- 2011 205 965

## Beschreibung

Die Erfindung betrifft ein System für ein Energiemanagement von Hausgeräten, wobei unter den Hausgeräten mindestens ein Großdistanz-Hausgerät sich in einem abgesetzten Teil eines Gebäudes, für das das Energiemanagement vorgesehen ist, befindet.

Die Erfindung betrifft ferner ein Verfahren zum Betreiben eines solchen Systems.

Bei der Vernetzung von Hausgeräten in einem System, das sich in besonderer Ausrichtung auf ein Energiemanagement von Hausgeräten richtet, wird derzeit überwiegend auf drahtlose Kommunikationsverfahren zurückgegriffen, die in zugelassenen Frequenzbändern von einem Vielfachen von 1 MHz betrieben werden. Dazu dienen drahtlose lokale Netzwerke, die vornehmlich in den Abkürzungen WLAN sowie Wi-Fi bekannt sind. Hierfür wird ein Frequenzband im Bereich von 2,4 und 5 GHz berücksichtigt. Bei dem Funknetzstandard ZigBee wird ein Frequenzband im Bereich von 2,4 GHz angewandt. Bei diesen Frequenzbereichen ist der Pfadverlust in der Freiraumdämpfung und bei der Durchdringung von Wänden und Decken eines Gebäudes ziemlich groß. Befindet sich ein Teil der zu vernetzenden Haugeräte, wie Waschmaschinen, Wäschetrockner oder Waschtrockner in abgesetzten Räumlichkeiten, Nebengebäuden, anderen Stockwerken oder Kellergeschossen, getrennt von einem, ein Energiemanagement für eine größere Anzahl von Hausgeräten bewirkenden, System, das auch unter der Kurzbezeichnung HEMS entsprechend der englischsprachigen Bezeichnung Home Energy Management System geläufig ist, so ist eine drahtlose Kommunikation zu den in den abgesetzten Räumlichkeiten befindlichen Hausgeräten nicht mehr möglich. Ein einzelnes von solchen Hausgeräten in abgesetzten Räumlichkeiten wird nachfolgend als Großdistanz-Hausgerät bezeichnet.

Als Ausweg, um größere Distanzen bei Einsatz von WLAN oder ZigBee zu überbrücken, könnte daran gedacht werden, Relais-Stationen bzw. Repeater einzusetzen, um Hindernisse, wie Stockwerksdecken zu überwinden. Der Aufwand hierfür erscheint jedoch sehr hoch. Außerdem gibt es Situationen, bei denen wegen der Komplexität der Gebäudestruktur der Einsatz von Relais-Stationen nicht möglich ist.

US 2001 0 034 569 A1 betrifft ein Energieversorgungssystem für ein Haus. Dort wird vorgeschlagen, Energieanforderungen mehrerer elektrischer Produkte zu sammeln und eine Gesamtanforderung für Energie an einen Energieversorger auszugeben. Die Produkte können mittels eines drahtlosen Systems miteinander vernetzt sein.

WO 2006 079 946 A2 betrifft einen drahtlosen Sensor nach Art eines RFID, der im ISM-Band betrieben werden kann. Auf ein drahtloses Signal hin wird der Sensor aktiviert und stellt einen Sensorwert drahtlos bereit. Dabei wird das ISM-Band sowohl für die Übermittlung des Signals als auch für die Übermittlung des Sensorwerts verwendet. Optional kann auch eine Übertragung von Energie zum Betrieb des Sensors im selben Band erfolgen.

Ein System für ein Energiemanagement von Hausgeräten bzw. ein HEM geht aus der Schrift US 2011/0153109 A1 hervor. Damit werden Hausgeräte und andere Verbraucher so gesteuert, dass in Spitzenlastzeiten der Verbrauch an elektrischer Energie reduziert ist. Es soll vermieden werden, nur von den speziellen Vorgaben eines Elektrizitätsversorgungsunternehmens abhängig zu sein. Dafür soll es möglich sein, dass der Benutzer des HEM das Belastungsprofil, das durch die Gesamtheit der Geräte auslösbar ist, selbst bestimmt. Die Ansteuerung der einzelnen Hausgeräte erfolgt drahtlos mit ZigBee, Wi-Fi oder Frequenzmodulation im Bereich von Radiofrequenzen. Die Problematik der drahtlosen Ansteuerung von Hausgeräten in abgesetzten Räumlichkeiten ist nicht angesprochen.

Ein gattungsbildendes System für ein Energiemanagement von Hausgeräten ist auch aus den Schriften US 2001/034569 A1 oder US 2011/205965 A1 bekannt.

Im Übrigen sei noch auf die Schriften US 2010/118692 A1 sowie die US 2011/137472 A1 verwiesen.

Die Aufgabe der Erfindung besteht daher darin, dass ein System für ein Energiemanagement von Hausgeräten angegeben wird, das auch für die drahtlose Ansteuerung von Hausgeräten in abgesetzten Räumlichkeiten geeignet ist.

Ferner soll ein Verfahren zum Betreiben eines solchen Systems angegeben werden.

Die Aufgabe der Erfindung wird durch die Gesamtheit der im unabhängigen Anspruch angegebenen und auf ein System gerichteten Merkmale gelöst und durch die auf diesen Anspruch rückbezogenen, abhängigen Ansprüche weitergebildet.

Entsprechendes gilt für die im weiteren, unabhängigen Anspruch angegebenen und auf ein Verfahren gerichteten Merkmale, die dann durch die auf diesen Anspruch rückbezogenen, abhängigen Ansprüche weitergebildet werden.

Die Erfindung betrifft also ein System für ein Energiemanagement von Hausgeräten, wobei mindestens ein Großdistanz-Hausgerät unter den Hausgeräten sich in einem abgesetzten Teil eines Gebäudes, für das das Energiemanagement vorgesehen ist, befindet, wobei vorgesehen ist,
- dass das Großdistanz-Hausgerät eine Gebäude-bezogene Einheit für ein Energiemanagement und ferner eine Aktivierungsschaltung aufweist, die von einer von der Gebäude-bezogenen Einheit auslösbaren Kurzzeit-Funkverbindung ansteuerbar ist und damit in einen aktivem Zustand versetzbar ist, sowie dass im aktiven Zustand das Großdistanz-Hausgerät von mindestens einem systembezogenen Energiemanagement über eine Mobilfunkverbindung auf Basis des Mobilfunkstandards LTE/4G ansteuerbar ist;
- und dass die Kurzzeit-Funkverbindung mindestens bezogen auf das Gebäude wirksam ist, wobei die Funkverbindung im Frequenzband 868/915 MHz betreibbar ist.

Bei der Auslegung der Kurzzeit-Funkverbindung wird darauf geachtet, dass diese mindestens bezogen auf das Gebäude, für das das Energiemanagement von Hausgeräten vorgesehen ist, wirksam ist und zwar mindestens für das Einschalten der Aktivierungsschaltung. Es wird ferner berücksichtigt, dass die Funkverbindung im Frequenzband 868 MHz oder 915 MHz betreibbar ist, wobei 868 MHz für Europa und 915 MHz für die USA und Kanada vorgesehen sind. Für diese Frequenzen sind nur kurze relative Einschaltzeiten von < 1% bzw. < 10% zugelassen. Ferner sind nur kurze Datenpakete mit sehr geringen Bandbreiten möglich, was für den angestrebten Zweck der mindest-erforderlichen Einschaltung der Aktivierungsschaltung vollkommen ausreichend ist. Ein Datenaustausch, wie dies bei einem System für das Energiemanagement von Hausgeräten schon in Bezug auf ein Hausgerät, wie das Großdistanz-Hausgerät erforderlich ist, könnte jedoch nicht über ein Frequenzband, zugehörig zu dem Bereich um 868/915 MHz, im Rahmen der zulässigen Bedingungen erfolgen, so dass die Kombination mit dem Mobilfunkstandard LTE/4G sich als gerechtfertigt erweist.

Mit der Erfindung ist es also möglich, ein Großdistanz-Hausgerät im Rahmen eines Systems von Hausgeräten ansteuern zu können, ohne auf den Einsatz einer Mobilfunkverbindung verzichten zu müssen. Eine LTE Mobilfunkverbindung entsprechend der englischsprachigen Bezeichnung Long-Term-Evolution, die auch mit 4G bezeichnet wird, stellt einen neuen Mobilfunkstandard dar, der mit einer sehr hohen Datenübertragungsrate einhergeht. Es kann jedoch auch von einer guten Durchdringungsfähigkeit von Wänden von Gebäuden ausgegangen werden, was für die erfindungsgemäße Lösung von hoher Bedeutung ist. Da jedoch die Kommunikationsmodule für die LTE/4G Mobilfunktechnik mit einem höheren Strom- bzw. Energieverbrauch einhergehen als dies für entsprechende Module bei Einsatz von verbrauchsminimierten Modulen für Wi-Fi oder Zig-Bee der Fall ist, wird nach der Erfindung vorgesehen, dass eine Funkverbindung in einem gegenüber Wi-Fi oder ZigBee geringeren Frequenzbereich eingesetzt wird, die eine bessere Durchdringungsfähigkeit von Wänden von Gebäuden besitzt, die jedoch nur kurzfristig eingesetzt wird, um eine Aktivierungsschaltung zu aktivieren, so dass die LTE/4G Mobilfunktechnik nur für den Betrieb des Großdistanz-Hausgerätes wirksam wird. Dabei wird davon ausgegangen, dass ein Großdistanz-Hausgerät, wie eine Waschmaschine oder ein Wäschetrockner nur wenige Stunden pro Woche in Betrieb genommen wird. Die Kommunikationsmodule für die LTE/4G Mobilfunktechnik werden daher auch nur dann in Betrieb genommen, wenn das zugehörige Hausgerät in Betrieb genommen wird. Durch die nur kurzzeitige Verwendung eines gegenüber Wi-Fi oder ZigBee geringeren Frequenzbereiches ist es zudem möglich, den gesetzlichen Vorschriften über die Verwendung dieser Frequenzen zu entsprechen.

Es ist daher entsprechend der Erfindung vorgesehen, dass die Aktivierungsschaltung bei deren Aktivierung im Großdistanz-Hausgerät ein Datenkommunikationsmodul auf Basis des Mobilfunkstandards LTE/4G mittelbar einschaltet und insbesondere vorgesehen ist, dass über dieses Datenkommunikationsmodul alle Steuerungs- und Überwachungsvorgänge in dem Großdistanz-Hausgerät ausführbar sind. Damit wird die Anwendung des Mobilfunkstandards LTE/4G genau auf die Zeit des Betriebs des Großdistanz-Hausgerät beschränkt.

Für die Einschaltung der Aktivierungsschaltung weist die Kurzzeit-Funkverbindung insbesondere einen batteriegespeisten, dem Großdistanz-Hausgerät zugeordneten, Empfänger auf. Somit kann das Datenkommunikationsmodul für den Mobilfunkstandard zusammen mit dem Großdistanz-Hausgerät eingeschaltet werden. Eines separaten Ausschaltsignals bedarf es in der Regel nicht, da die Datenkommunikation zwischen dem System für das Energiemanagement von Hausgeräten und dem betreffenden Großdistanz-Hausgerät so erfolgen kann, dass im initiierten Steuerungsablauf auch das Ende des Betriebs mit berücksichtigt wird, was dann sowohl für das Hausgerät als auch für die Aktivierungsschaltung gilt.

Für die Mobilfunkverbindung erfolgt der Betrieb im 800-MHz-Band. Für den Betrieb des Mobilfunkstandards LTE/4G sind zwar auch Frequenzen über 1 GHz vorgesehen, jedoch ist es vorliegend wegen den Eigenschaften der besseren Durchdringungsfähigkeiten von Gebäuden zu bevorzugen, einen Frequenzbereich zu verwenden, der sich durch Wegfall des analogen Fernsehens bzw. durch den Gewinn von Frequenzbereichen durch Anwendung des digitalen Fernsehens ergab. Damit stehen die zugelassenen, im Bereich von 790 bis 862 MHz liegenden, Frequenzbänder für die Anwendung bei der Erfindung an.

Um das System für das Energiemanagement mit hoher Funktionalität zu versehen, ist vorgesehen, dass die Gebäude-bezogene Einheit des Energiemanagements mit einer virtuellen Einheit eines Energiemanagements in einer Master-Client-Beziehung steht, wobei die virtuelle Einheit durch einen Server im Internet, ausbildbar ist. Dann ist es möglich, stets mit einer aktualisierten Software zu arbeiten, die an zentraler Stelle von einem Serviceunternehmen oder einem Hersteller von Hausgeräten über das Internet zur Verfügung gestellt werden kann.

Um die Mobilfunkverbindung zwischen dem Großdistanz-Hausgerät und dem Internet ausführen zu können, ist ein Radio-Access-Netzwerk und ein Evolved-Packet-Netzwerk vorgesehen, wobei diese Netzwerke durch einen Mobilfunkbetreiber bereitstellbar sind. Dabei ist ferner vorgesehen, dass eine Kommunikation der virtuellen Einheit und der Gebäude-bezogene Einheit des Energiemanagements über das Internet durchführbar ist, um die zuvor schon erörterte hohe Funktionalität zu erreichen.

Bei einer andersartigen Verwirklichung der Erfindung ist die Mobilfunkverbindung zwischen dem Großdistanz-Hausgerät und der lokalen Einheit des Energiemanagements über ein virtuelles privates Netzwerk ausbildbar. Hierfür kann im Weiteren vorgehen sein, dass die Funkverbindung über ein Radio-Access-Netzwerk, ein Evolved-Packet-Netzwerk und einen lokalen Internet-Zugangs-Router zum Internet gebildet wird. Das virtuelle, private Netzwerk VPN ist vorliegend mit Pipe bezeichnet. Es stellt einen VPN-Tunnel dar.

Der Verbindungsaufbau der Mobilfunkverbindung auf Basis des Standards LTE/4G ist begünstigt, wenn nahe dem Hausgerät einen Access-Point bzw. Knoten des Netzwerks vorliegt.

Entsprechend der Erfindung wird eine Mobilfunkverbindung vorgesehen, bei der ein lokaler Internet-Zugangs-Router mit einem Access- Point bzw. Knoten nahe des Großdistanz-Hausgerätes über eine Mikrozelle bzw. Femto-Zelle in Verbindung steht. Es erfolgt nur eine Datenübermittlung über den lokalen Router von und zur lokalen Einheit des Energiemanagements. Ein Umweg über das Core-Netzwerk des Mobilfunkanbieters wie auch ein Umweg über das Internet ist dabei nicht erforderlich.

Bei dem erfindungsgemäßen Verfahren wird vorgesehen, dass durch eine Kurzzeit-Funkverbindung veranlasst wird, dass eine Mobilfunkverbindung auf Basis des Mobilfunkstandards LTE/4G zwischen dem Großdistanz-Hausgerät und der Einheit des Energiemanagements aufgebaut wird, dem Großdistanz-Hausgerät eine IPv6- Adresse zugewiesen wird, und eine Prozess-Steuerung des Hausgerätes über die Mobilfunkverbindung auf Basis des Mobilfunkstandards LTE/4G nur solange erfolgt, bis ein initiierter Prozess beendet ist.

Damit dient die Kurzzeit-Funkverbindung lediglich dazu, einen Wachruf für die eigentliche Funkverbindung entsprechend dem Mobilfunkstandard LTE/4G auszulösen, wobei die Mobilfunkverbindung nach dem Standard LTE/4G auf die Dauer des Betriebes des Großdistanz-Hausgerät beschränkt bleibt.

Bei der Weiterbildung des Verfahrens wird berücksichtigt, dass eine lokale Einheit des Energiemanagements mit einer virtuellen Einheit eines Energiemanagements sich im Datenaustausch befindet und dabei ausgehend vom Großdistanz-Hausgerät ein Mobilfunkverbindungsaufbau auf Basis des Standards LTE/4G über ein Radio-Access-Netzwerk, ein Evolved-Packet-Core-Netzwerk hin zu der im Internet befindlichen, virtuellen Einheit des Energiemanagements erfolgt.

In gewisser Abänderung hierzu ist es auch möglich, dass ausgehend vom Evolved-Packet-Core-Netzwerk hin zur lokalen Einheit des Energiemanagementsein ein Datenaustausch über ein virtuelles privates Netzwerk VPN erfolgt, wobei die Verbindung zu der im Internet befindlichen, virtuellen Einheit des Energiemanagements über einen lokalen Internet Zugangs-Router erfolgt.

Bei einer Vereinfachung des Verfahrens erfolgt ein Verbindungsaufbau von der Luftschnittstelle des Großdistanz-Hausgerätes lediglich zum lokalen Router über eine lokale Femto-Zelle. Dabei wird weder eine Verbindung zum Internet noch ein Core-Netzwerk des Mobilfunkanbieters in Anspruch genommen.

Soweit die Erfindung durch auf die unabhängigen Ansprüche rückbezogene, nicht selbständige Ansprüche weitergebildet wird, so soll es so sein, dass eine zunächst angegebene Kette von Rückbeziehungen nicht einschränkend in Bezug auf die insgesamt mitgeteilte Lehre zu sehen ist, soweit auch andere Kombinationen von Merkmalen von Ansprüchen sich als geeignet und ausführbar aus Sicht des Fachmanns ergeben.

Im Folgenden wird die Erfindung anhand von Ausführungsbeispielen schematisch genauer beschrieben. Gleiche Bezugszeichen zeigen gleiche oder vergleichbare Teile. Die Figur wird zunächst kurz erläutert.

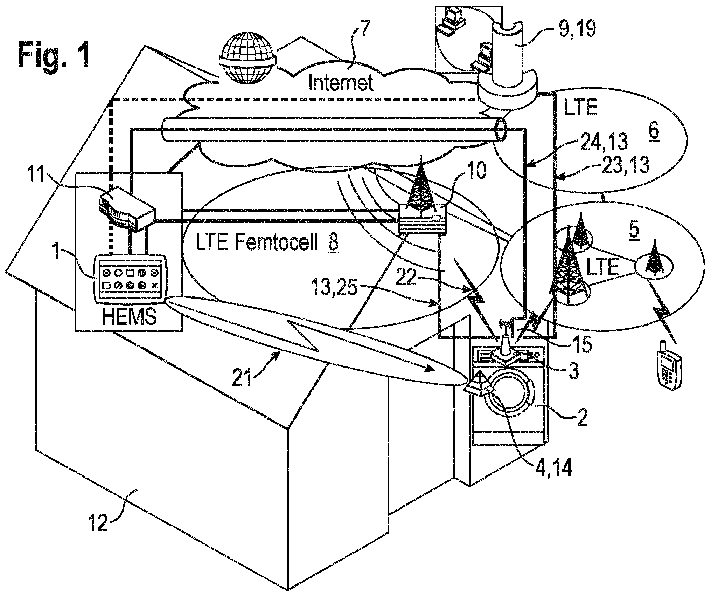

Fig. 1 zeigt in schematischer, teilweise perspektivischer Darstellung eine Ansicht eines Gebäudes mit einem in einer abgesetzten Räumlichkeit befindlichen Hausgerät mit zugehörigen, erfindungsgemäßen Funkverbindungen.

In Fig. 1 ist schematisch ein Gebäude 12 dargestellt, innerhalb dessen im Wesentlichen Hausgeräte als Energieverbraucher befindlich sind, die über eine Gebäude-bezogene Einheit 1 eines Energiemanagements beispielsweise so gesteuert werden können, dass die gegenüber einem Energieversorgungsunternehmen zu bezahlenden Stromkosten minimiert werden können, ohne dass ein Benutzer solcher Geräte in seinen Bedürfnissen zu sehr eingeschränkt ist. Da es ferner auch angestrebt wird, eine informationstechnische Beeinflussung von Hausgeräten ohne eine drahtgebundene Technik realisieren zu können, ist es erforderlich, auch in absetzten Räumlichkeiten befindliche Hausgeräte mit einer drahtlosen Übertragungstechnik sicher beeinflussen zu können. Ein solches Hausgerät in einer solchen abgesetzten Räumlichkeit, wie zum Beispiel eine Waschmaschine oder ein Wäschetrockner, ist in Fig. 1 dargestellt und wird nachfolgend als Großdistanz-Hausgerät 2 bezeichnet.

Es ist bevorzugt, dass zur drahtlosen Kommunikation mit Hausgeräten, die sich auch in abgesetzten Räumlichkeiten befinden können, wie das bereits erwähnte Großdistanz-Hausgerät 2, nicht lokale Netzwerke LAN, die mit den Abkürzungen Wi-Fi und ZigBee geläufig sind, zu verwenden sind, sondern dass eine Mobilfunkverbindung 13 zu verwenden ist, die dem Standard LTE, entsprechend der englischsprachigen Bezeichnung Long-Term-Evolution, entspricht. Man bezeichnet ein solches Netz auch als 4G Netz. Insofern ist die Nennung LTE/4G zu Stande gekommen. Der Funkverbindung 13 auf Basis des neuen Mobilfunkstandards LTE/4G weist eine ausreichend hohe Bandbreite bei geringer Latenzzeit und aufgrund der inhärent stärkeren Sendeleistung eine große Reichweite und eine große Hindernis-Durchdringungsfähigkeit auf. Somit ist eine Überlegenheit gegenüber obig erwähnten lokalen Netzwerken, wie Wi-Fi und ZigBee evident. Die Funkverbindung 13 erweist sich als besonders leistungsfähig, wenn für das LTE/4G Netz die neu freigegebenen bzw. zugelassenen, im Bereich von 790 - 863 MHz liegenden, Frequenzbänder beim Ausführen der erfinderischen Lehre benutzt werden.

Da Kommunikationsmodule für den Einsatz von LTE/4G, wie ein nachfolgend noch erörtertes Kommunikationsmodul 3, zugeordnet dem Großdistanz-Hausgerät 2, sowohl im aktiven Betrieb als auch im Bereitschaftsbetrieb gegenüber entsprechenden Moduln bei Wi-Fi oder ZigBee einen hohen Stromverbrauch aufweisen, wird nach der Erfindung vorgesehen, dass das Kommunikationsmodul 3 nur beim tatsächlichen Betrieb des Großdistanz-Hausgerätes 2, veranlasst durch ein Energiemanagement, wie das Energiemanagement 1, eingeschaltet wird. Um eine solche Einschaltung zu bewirken, ist vorgesehen, eine nur für kurze Zeit erforderliche Funkverbindung, wie eine Kurzzeit-Funkverbindung 21, einzusetzen. Die Kurzzeit-Funkverbindung 21 wird über die Einheit 1 des Gebäude-bezogenen Energiemanagements ausgelöst. Auf der Seite des Großdistanz-Hausgerätes 2 befindet sich ein Empfänger 4, der geeignet ist, Signale der Funkverbindung 21 empfangen zu können. Damit dies permanent möglich ist, wird im Empfänger 4 eine Batterie (ohne Bezugszeichen) eingesetzt. Dabei kann davon ausgegangen werden, dass bei dem durch die eingesetzte Batterie ermöglichtem, ständigem Bereitschaftsbetrieb des Funkempfängers 4 nur ein äußerst minimaler Stromverbrauch einhergeht, so dass ein Betrieb, wie Bereitschaftsbetrieb, über mindestens ein Jahr möglich ist. im Übrigen wird für die Kurzzeit-Funkverbindung ein Betrieb in einem 868/915 MHz Frequenzband vorgesehen, wobei 868 MHz für Europa und 915 MHz für die USA und Kanada bestimmt sind. Bei diesen Frequenzen sind durch gesetzliche Bestimmungen nur kurze relative Einschaltzeiten von <1% bzw. < 10% zugelassen, was für die Anwendung bei der Erfindung nicht hinderlich ist, da der Zweck des Erreichens des Funkempfängers 4 erfüllbar ist. Außerdem ist im benannten Frequenzbereich, die Durchdringungsfähigkeit von Wänden und Decken eines Gebäudes in hervorragender Weise gegeben. Über die Funkverbindung 21 kann daher der Empfänger 4 gut angesprochen werden und eine Aktivierungsschaltung 14 aktiviert werden, so dass in Folge davon das Datenkommunikationsmodul 3 der Mobilfunkverbindung 13 auf Basis des LTE/4G Standards auch eingeschaltet wird, wie auch die gesamte Stromversorgung des Großdistanz-Hausgerätes 2. Damit kann ein gesamter Prozessablauf des Hausgerätes 2 über die Mobilfunkverbindung 13 nach Vorgaben eines Energiemanagements, wie durch die lokale Einheit 1, erfolgen. Es soll bereits an dieser Stelle erwähnt werden, dass eine Abschaltung des Hausgerätes 2 nicht unbedingt über die Kurzzeit-Funkverbindung 21 zu erfolgen braucht, obwohl dies alternativ möglich ist, da das Energiemanagement, wie mit der lokalen Einheit 1, über die Mobilfunkverbindung 13 auch die Beendigung des Prozessablaufs auslösen kann. Damit wird die Aktivierungsschaltung 14 und somit auch das Datenkommunikationsmodul 3 und die Stromversorgung des Hausgerätes abgeschaltet.

Bei einer Einschaltung des Kommunikationsmoduls 3 versucht dieses eine LTE Funkzelle zu detektieren. Bei Registrierung in dieser Zelle kann u. a. eine Zuweisung einer IPv6 Adresse, nachfolgend mit 22 bezeichnet, erfolgen, wenn das Hausgerät 2 keine feste Adresse besitzt.

Die Funkzelle kann entweder eine - normale Zelle - in dem LTE/4G Netz also ein Radio-Accesss-Netzwerk sein, das nachfolgend mit 5 bezeichnet wird. Es kann sich auch um eine lokal im Gebäude 12 installierte Mikrozelle bzw. um eine sogenannte LTE/4G FemtoZelle, nachfolgend mit 8 bezeichnet, handeln. Nach dem Aufbau der Mobilfunkverbindung 13 bzw. einer LTE/4G Datenverbindung versucht das Modul 3 ein virtuelles privates Netzwerk VPN bzw. eine vergleichbar gesicherte End-to-End Verbindung zu der Zieladresse 22 aufzubauen. Es kann auch vorgesehen sein, über verschiedene Zugangsserver-Adressen des Mobilfunkbetreibers den sogenannten Access-Point-Namen, auch mit APNs bezeichnet, diese Adresse 22 zu erreichen. Nach dem erfolgreichen Aufbau eines VPN - Tunnels zu der Adresse 22 gibt es verschiedene Abläufe zur Kommunikationsbezogenen Einbindung des Hausgerätes 2 in die Kommunikation mit dem Energiemanagement, wie beispielweise durch die lokale Einheit 1 repräsentiert, das die Aussendung eines Signals über die Kurzzeit-Funkverbindung 21 zum Empfänger 4 ausgelöst hat.

Es wird nun auf drei grundsätzlich mögliche Abläufe zur Kommunikation eines Energiemanagement nach Aussendung eines Signals über die Kurzzeit-Funkverbindung 21 beschrieben.

In einem ersten Fall ist vorgesehen, dass das Hausgerät 2 mit einem Server 19 im Internet 7 kommuniziert. Ein Server im Internet, wie der beispielsweise benannte Server 19, stellt eine Realisierung eines sogenannten virtuellen Cloud Computing dar. Damit kann im vorliegenden Fall ein Energiemanagement 9 von dem Server 19 ausgehen, wobei vorgesehen ist, dass zwischen dem Server 19 und der Einheit 1 des lokalen Energiemanagement eine Master-Client Beziehung besteht, wobei die Einheit 1 des lokalen Energiemanagements den Verbindungsaufbau ausgelöst hat. Die Kommunikation verläuft dabei von dem Datenkommunikationsmodul 3 des Hausgerätes 2 zu einer LTE/4G Luftschnittstelle 15 über das Radio-Access-Netzwerk 5 zu einem sogenannten Evolved-Paket-Core-Netzwerk 6 des Mobilfunkbetreibers hin zum Internet 7, das mit dem beispielsweise aufgeführten Server 19, das als übergeordnet zu betrachtende Energiemanagement 9, auch als virtuelles Energiemanagement anzusehende, Energiemanagement, ausführt. Diese spezielle Mobilfunkverbindung wird in Fig. 1 mit der Verlaufslinie 23 hervorgehoben. Zwischen dem lokalen Energiemanagement mit der Einheit 1, das den Prozessablauf ausgelöst hat und dem virtuellen Energiemanagement besteht über das Internet 7 ebenfalls eine Kommunikationsbeziehung.

Im zweiten Fall kommuniziert das Hausgerät 2 mit seinem Kommunikationsmodul 3 direkt mit dem lokalen Energiemanagement mit dessen Einheit 1, von der ausgehend der Verbindungsaufbau ausgelöst wurde und zwar über ein mit Pipe bzw. Tunnel zu charakterisierendes Virtuelles Privates Netzwerk VPN. Diese Funkverbindung wird in Fig. 1 mit der Verlaufslinie 24 hervorgehoben. Die Kommunikations-Verbindung verläuft vom Hausgerät 2 über die Luftschnittstelle 15, dem Radio-Access-Netzwerk 5, dem Evolved-Packet-Core Netzwerk 6 und dem Internet 7 über einen lokalen Internet-Zugangs-Router 11 zu der Einheit 1 des lokalen Energiemanagements.

Im dritten Fall kommuniziert das Hausgerät 2 über ein virtuelles privates Netzwerk direkt mit dem lokalen Energiemanagement mit dessen Einheit 1. Die Kommunikations-Verbindung verläuft in diesem Fall vom Hausgerät 2 über die Luftschnittstelle 15 zu einem Access-Point 10 bzw. Knoten 10 der lokalen Mikrozelle bzw. Femtozelle 8, definitionsgemäß im Gebäude 12. Diese Funkverbindung wird in Fig. 1 mit der Verlaufslinie 25 hervorgehoben. Die Mikrozelle 8 hat eine direkte Datenverbindung zu dem lokalen Zugangs-Router 11. Damit besteht eine unmittelbare Verbindung zum lokalen Energiemanagement mit dessen Einheit 1. Es wird also vermieden, eine Datenverbindung über das Internet und/oder das Evolved-Packet-Core Netzwerk 6 des Mobilfunkanbieters vornehmen zu müssen.

Nach dem Aufbau einer bidirektionalen Kommunikations-Verbindung zwischen einem Energiemanagement mit der Einheit 1 und/oder dem Energiemanagement 9 mit dem Server 19 und dem Hausgerät 2 erfolgt die Übertragung von Steuerungs- bzw. Energiemanagement-Kommandos zum Hausgerät 2 und beispielweise Status-bezogene Rückmeldungen vom Hausgerät 2 zum Energiemanagement 1 bzw. 9. Bei Beendigung des Prozessablaufs im Hausgerät 2 ist vorgesehen, dass die Stromabschaltung des Hausgerätes 2 vorzunehmen. Dies kann über die Kurzzeit-Funkverbindung 21 und der abzuschaltenden Aktivierungsschaltung 14 oder über einen Beendigungsbefehl des von Energiemanagement 1 bzw. 9 beeinflussten Prozessablaufs erfolgen.

### Bezugszeichenliste

- 1: Energiemanagement, Gebäude-bezogene (lokale) Einheit
- 2: Großdistanz-Hausgerät
- 3: Datenkommunikationsmodul
- 4: Empfänger, wake-up; für Kurzzeit-Funkverbindung
- 5: Radio-Access Netzwerk
- 6: Evolved-Packet-Core Netzwerk
- 7: Internet
- 8: Femto-Zelle, LTE, auch Mikrozelle
- 9: Energiemanagement, virtuelle Einheit
- 10: Access-Point bzw. Knoten
- 11: Zugangs-Router, lokal (Gebäude-bezogen)
- 12: Gebäude
- 13: Mobilfunkverbindung
- 14: Aktivierungsschaltung
- 15: Luftschnittstelle
- 19: Server
- 21: Kurzzeit-Funkverbindung
- 22: IPv6-Adresse, auch dynamisch
- 23: erste Art von Verbindungsaufbau
- 24: zweite Art von Verbindungsaufbau
- 25: dritte Art von Verbindungsaufbau

## Patentansprüche

1. System für ein Energiemanagement von Hausgeräten, die mittels eines drahtlosen lokalen Netzwerks miteinander vernetzt sind, wobei unter den Hausgeräten mindestens ein Großdistanz-Hausgerät (2) vorgesehen ist, das sich in einem abgesetzten Teil eines Gebäudes (12), für das das Energiemanagement vorgesehen ist, befindet, sodass eine drahtlose Kommunikation mittels des drahtlosen lokalen Netzwerks nicht möglich ist, **dadurch gekennzeichnet,**
- **dass** das System eine Gebäude-bezogene Einheit (1) für ein Energiemanagement und ferner eine Aktivierungsschaltung (14) aufweist, die mit einer von der Gebäude-bezogenen Einheit (1) auslösbaren Kurzzeit-Funkverbindung (21) ansteuerbar und damit in einen aktiven Zustand versetzbar ist,
- sowie dass im aktiven Zustand das Großdistanz-Hausgerät (2) von mindestens einem systembezogenen Energiemanagement über eine Mobilfunkverbindung (13; 23, 24, 25) mit einem Datenkommunikationsmodul (3) auf Basis des Mobilfunkstandards LTE/4G im 800 MHz-Band-Bereich ansteuerbar ist;
- und **dass** die Kurzzeit-Funkverbindung (21) mindestens bezogen auf das Gebäude (12) wirksam ist, wobei die Kurzzeit-Funkverbindung (21) im Frequenzband 868/915 MHz vorgesehen ist, und
- **dass** die Kurzzeit-Funkverbindung (21) dazu eingerichtet ist, auf einen Batterie-gespeisten, dem Großdistanz-Hausgerät (2) zugeordneten Empfänger (4) so einzuwirken, dass das Datenkommunikationsmodul (3) zusammen mit dem Großdistanz-Hausgerät (2) einschaltbar ist, wobei
- die Aktivierungsschaltung (14) bei deren Aktivierung im Großdistanz-Hausgerät (2) das Datenkommunikationsmodul (3) auf Basis des Mobilfunkstandards LTE/4G mittelbar einschaltet und insbesondere vorgesehen ist, dass über dieses Datenkommunikationsmodul (3) alle Steuerungs- und Überwachungsvorgänge in dem Großdistanz-Hausgerät (2) ausführbar sind, wobei
- die Gebäude-bezogene Einheit (1) für ein Energiemanagement mit einer virtuellen Einheit (9) eines Energiemanagement in einer Master-Client-Beziehung steht, wobei die virtuelle Einheit (9) durch einen Server (19) im Internet (7), ausbildbar ist, wobei
- die Mobilfunkverbindung (13; 24) einen Access-Point bzw. Knoten (10) aufweist, und wobei
- ein lokaler Internet-Zugangs-Router (11) mit dem Access- Point (10) über eine Mikrozelle (8) in Verbindung steht.

2. System nach Anspruch 1, **dadurch gekennzeichnet, dass** die Mobilfunkverbindung (13, 23) zwischen dem Großdistanz-Hausgerät (2) und dem Internet (7) durch ein Radio-Access-Netzwerk (5) und ein Evolved-Packet-Netzwerk (6) gebildet wird, wobei die Netzwerke (6, 7) durch einen Mobilfunkbetreiber bereitstellbar sind.

3. System nach Anspruch 1 oder 2, **dadurch gekennzeichnet, dass** eine Kommunikation der virtuelle Einheit (9) und der Gebäude-bezogene Einheit (1) des Energiemanagements über das Internet (7) durchführbar ist.

4. System nach Anspruch 1, **dadurch gekennzeichnet, dass** eine Mobilfunkverbindung (13; 24) zwischen dem Hausgerät (2) und der Einheit (1) des Energiemanagements über ein virtuelles privates Netzwerk (VPN) ausbildbar ist.

5. System nach Anspruch 4, **dadurch gekennzeichnet, dass** die Mobilfunkverbindung (13; 24) über ein Radio-Access-Netzwerk (5) ein Evolved-Packet-Netzwerk (6) und einen lokalen Internet-Zugangs-Router (11) zum Internet (7) gebildet wird.

6. Verfahren zum Betreiben eines Systems nach einem der vorherigen Ansprüche, wobei insbesondere vorgesehen ist, dass das Großdistanz-Hausgerät (2) einer Gebäude- bezogenen Einheit (1) eines Energiemanagements zugeordnet werden kann, wobei folgende Schritte vorgesehen sind:
- durch die Kurzzeit-Funkverbindung wird veranlasst, dass die Mobilfunkverbindung auf Basis des Mobilfunkstandards LTE/4G zwischen dem Großdistanz-Hausgerät und der Einheit des Energiemanagements aufgebaut werden kann, und
- eine Prozess-Steuerung des Hausgerätes erfolgt über die Mobilfunkverbindung auf Basis des Mobilfunkstandards LTE/4G nur solange, bis ein initiierter Prozess beendet ist.

7. Verfahren nach Anspruch 6, wobei eine lokale Einheit des Energiemanagements mit einer virtuellen Einheit eines Energiemanagement sich im Datenaustausch befindet, wobei ausgehend vom Großdistanz-Hausgerät ein Mobilfunkverbindungsaufbau auf Basis des Standards LTE/4G über ein Radio-Access-Netzwerk, ein Evolved-Packet-Core-Netzwerk hin zu der im Internet befindlichen, virtuellen Einheit des Energiemanagements erfolgt.

8. Verfahren nach Anspruch 6, wobei eine lokale Einheit des Energiemanagements mit einer virtuellen Einheit eines Energiemanagement sich im Datenaustausch befindet, wobei ausgehend vom Großdistanz-Hausgerät ein Mobilfunkverbindungsaufbau auf Basis des Standards LTE/4G über ein Radio-Access-Netzwerk, ein Evolved-Packet-Core-Netzwerk hin zur lokalen Einheit des Energiemanagements über ein virtuelles privates Netzwerk erfolgt, wobei die Verbindung zu der im Internet befindlichen, virtuellen Einheit des Energiemanagements über einen lokalen Internet Zugangs-Router erfolgt.

## Claims

1. System for energy management of household appliances, which are networked together by means of a wireless local network, wherein among the household appliances at least one long-distance household appliance (2) is provided which is located in a detached part of a building (12) for which the energy management is provided, so that wireless communication by means of the wireless local network is not possible, **characterised in that**
- the system has a building-related unit (1) for energy management and furthermore an activation circuit (14), which can be actuated by a short-term radio connection (21) that can be triggered by the building-related unit (1), and thus can be shifted into an active state,
- and also, in the active state, the long-distance household appliance (2) can be actuated by at least one system-related energy management via a mobile radio connection (13; 23, 24, 25) with a data communication module (3) on the basis of the LTE/4G mobile radio standard in the 800 MHz band range;
- and the short-term radio connection (21) is active at least in relation to the building (12), wherein the short-term radio connection (21) is provided in the 868/915 MHz frequency band, and
- the short-term radio connection (21) is configured to act on a battery-fed receiver (4) assigned to the long-distance household appliance (2) such that the data communication module (3) can be connected together with the long-distance household appliance (2), wherein
- the activation circuit (14), when activated in the long-distance household appliance (2), indirectly connects the data communication module (3) on the basis of the LTE/4G mobile radio standard and in particular it is provided that all control and monitoring procedures in the long-distance household appliance (2) can be carried out via said data communication module (3), wherein
- the building-related unit (1) for energy management is in a master-client relationship with a virtual energy management unit (9), wherein the virtual unit (9) can be embodied by a server (19) on the Internet (7), wherein
- the mobile radio connection (13; 24) has an access point or node (10), and wherein
- a local Internet access router (11) is connected to the access point (10) via a microcell (8).

2. System according to claim 1, **characterised in that** the mobile radio connection (13, 23) between the long-distance household appliance (2) and the Internet (7) is formed by a radio access network (5) and an evolved packet network (6), wherein the networks (6, 7) can be provided by a mobile radio operator.

3. System according to claim 1 or 2, **characterised in that** a communication of the virtual unit (9) and the building-related energy management unit (1) can be performed via the Internet (7).

4. System according to claim 1, **characterised in that** a mobile radio connection (13; 24) between the household appliance (2) and the energy management unit (1) can be embodied via a virtual private network (VPN).

5. System according to claim 4, **characterised in that** the mobile radio connection (13; 24) is formed via a radio access network (5), an evolved packet network (6) and a local Internet access router (11) to the Internet (7).

6. Method for operating a system according to one of the preceding claims, wherein in particular it is provided that the long-distance household appliance (2) can be assigned to a building-related energy management unit (1), wherein the following steps are provided:
- the short-term radio connection prompts the mobile radio connection to be able to be set up on the basis of the LTE/4G mobile radio standard between the long-distance household appliance and the energy management unit, and
- a process control of the household appliance only takes place via the mobile radio connection on the basis of the mobile radio standard LTE-4G until an initiated process is terminated.

7. Method according to claim 6, wherein a local energy management unit is in data exchange with a virtual energy management unit, wherein starting from the long-distance household appliance a mobile radio connection setup takes place on the basis of the LTE/4G standard via a radio access network, an evolved packet core network to the virtual energy management unit located on the Internet.

8. Method according to claim 6, wherein a local energy management unit is in data exchange with a virtual energy management unit, wherein starting from the long-distance household appliance a mobile radio connection setup takes place on the basis of the LTE/4G standard via a radio access network, an evolved packet core network to the local energy management unit via a virtual private network, wherein the connection to the virtual energy management unit located on the Internet takes place via a local Internet access router.

## Revendications

1. Système pour la gestion énergétique d'appareils ménagers mis en réseau au moyen d'un réseau local sans fil, dans lequel les appareils ménagers comportent au moins un appareil ménager à grande distance (2) qui se trouve dans une partie éloignée d'un bâtiment (12) pour lequel la gestion énergétique est prévue, de sorte qu'une communication sans fil au moyen du réseau local sans fil n'est pas possible, **caractérisé en ce que**
- le système présente une unité liée au bâtiment (1) pour la gestion énergétique et en outre un circuit d'activation (14) qui peut être commandé par une liaison radioélectrique de courte durée (21) déclenchable par l'unité liée au bâtiment (1) et pouvant ce faisant être placée dans un état actif,
- et **en ce qu'**à l'état actif, l'appareil ménager à grande distance (2) peut être commandé par au moins une gestion énergétique liée au système, par le biais d'une liaison radioélectrique mobile (13 ; 23, 24, 25) avec un module de communication de données (3) sur la base de la norme de radiocommunication mobile LTE/4G dans la plage des 800 MHz,
- et **en ce que** la liaison radioélectrique de courte durée (21) opère au moins en lien avec le bâtiment (12), la liaison radioélectrique de courte durée (21) étant prévue dans la gamme de fréquences 868/915 MHz, et
- **en ce que** la liaison radioélectrique de courte durée (21) est aménagée afin d'agir sur un récepteur (4) alimenté par batterie et affecté à l'appareil ménager à grande distance (2) de telle sorte que le module de communication de données (3) est activable avec l'appareil ménager à grande distance (2), dans lequel
- le circuit d'activation (14) active indirectement, lors de son activation, dans l'appareil ménager à grande distance (2) le module de communication de données (3) sur la base de la norme de radiocommunication mobile LTE/4G et il est en particulier prévu que l'ensemble des processus de commande et de surveillance soient exécutables dans l'appareil ménager à grande distance (2) par le biais de ce module de communication de données (3), dans lequel
- l'unité liée au bâtiment (1) se trouve, pour une gestion énergétique, dans une liaison maître-client avec une unité virtuelle (9) d'une gestion d'énergie, l'unité virtuelle (9) pouvant être créée par un serveur (19) sur Internet (7), dans lequel
- la liaison radioélectrique mobile (13 ; 24) présente un point d'accès resp. un nœud (10), et dans lequel
- un routeur d'accès à Internet local (11) se trouve en liaison avec le point d'accès (10) par le biais d'une microcellule (8).

2. Système selon la revendication 1, **caractérisé en ce que** la liaison radioélectrique mobile (13, 23) entre l'appareil ménager à grande distance (2) et Internet (7) est constituée par un réseau Radio Access (5) et un réseau Evolved Packet (6), dans lequel les réseaux (6, 7) peuvent être mis à disposition par un opérateur de téléphonie mobile.

3. Système selon la revendication 1 ou 2, **caractérisé en ce qu'**une communication de l'unité virtuelle (9) et de l'unité liée au bâtiment (1) de la gestion énergétique est réalisable par le biais d'Internet (7).

4. Système selon la revendication 1, **caractérisé en ce qu'**une liaison radioélectrique mobile (13 ; 24) peut être créée entre l'appareil ménager (2) et l'unité (1) de la gestion énergétique par le biais d'un réseau privé virtuel (VPN).

5. Système selon la revendication 4, **caractérisé en ce que** la liaison radioélectrique mobile (13 ; 24) est constituée par le biais d'un réseau Radio Access (5), un réseau Evolved Packet (6) et un routeur d'accès à Internet local (11) vers Internet (7).

6. Procédé d'exploitation d'un système selon l'une des revendications précédentes, dans lequel il est en particulier prévu que l'appareil ménager à grande distance (2) puisse être affecté à une unité liée au bâtiment (1) d'une gestion énergétique, les étapes suivantes étant prévues :
- liaison radioélectrique de courte durée fait en sorte que la liaison radioélectrique mobile sur la base de la norme de radiocommunication mobile LTE/4G puisse être établie entre l'appareil ménager à grande distance et l'unité de la gestion énergétique, et
- une commande de processus de l'appareil ménager s'opère par le biais de la liaison radioélectrique mobile sur la base de la norme de radiocommunication mobile LTE/4G uniquement aussi longtemps qu'un processus lancé soit terminé.

7. Procédé selon la revendication 6, dans lequel une unité locale de la gestion énergétique se trouve en échange de données avec une unité virtuelle d'une gestion énergétique, dans lequel une structure de liaison radioélectrique mobile s'opère au départ de l'appareil ménager à grande distance sur la base de la norme LTE/4G par le biais d'un réseau Radio Access, un réseau Evolved Packet Core vers l'unité virtuelle de la gestion énergétique se trouvant sur Internet.

8. Procédé selon la revendication 6, dans lequel une unité locale de la gestion énergétique se trouve en échange de données avec une unité virtuelle d'une gestion énergétique, dans lequel une structure de liaison radioélectrique mobile s'opère au départ de l'appareil ménager à grande distance sur la base de la norme LTE/4G par le biais d'un réseau Radio Access, un réseau Evolved Packet Core vers l'unité locale de la gestion énergétique par le biais d'un réseau privé virtuel, dans lequel la liaison avec l'unité virtuelle de la gestion énergétique se trouvant sur Internet s'opère par le biais d'un routeur d'accès à Internet local.
